# EUROPEAN PATENT SPECIFICATION

(11) **EP 2 888 184 B1**
(45) Date of publication and mention of the grant of the patent: **05.04.2017**
(21) Application number: 13831084.2
(22) Date of filing: 12.03.2013
(51) Int. Cl.: B65F 5/00, B65F 1/14, B65F 1/12, B65G 53/60, B65G 53/36

(54) **METHOD FOR HANDLING MATERIAL IN A MATERIAL CONVEYING SYSTEM, MATERIAL CONVEYING SYSTEM AND A SEPARATING DEVICE FOR A MATERIAL CONVEYING SYSTEM**
VERFAHREN ZUR HANDHABUNG EINES MATERIALS IN EINEM MATERIALFÖRDERSYSTEM, MATERIALFÖRDERSYSTEM SOWIE TRENNVORRICHTUNG FÜR DAS MATERIALFÖRDERSYSTEM
PROCÉDÉ POUR MANIPULER UN MATÉRIAU DANS UN SYSTÈME DE TRANSPORT DE MATÉRIAU, SYSTÈME DE TRANSPORT DE MATÉRIAU ET DISPOSITIF SÉPARÉ POUR UN SYSTÈME DE TRANSPORT DE MATÉRIAU

(30) Priority: 22.08.2012 FI 20125870
(43) Date of publication of application: 01.07.2015
(73) Proprietor: Maricap OY, 01450 Vantaa (FI)
(72) Inventor: SUNDHOLM, Göran, FI-04310 Tuusula (FI)
(74) Representative: Heinänen Oy Patent Agency
(86) International application number: PCT/FI2013/050271
(87) International publication number: WO 2014/029903

(56) References cited:
- WO-A1-90/01008
- WO-A1-2006/032073
- WO-A1-2009/061264
- WO-A1-2009/061264
- WO-A1-2009/080881
- WO-A1-2011/151522
- WO-A1-2011/151522
- DE-U1- 29 508 516
- JP-A- H05 168 980
- JP-A- H08 244 906
- JP-A- H08 244 906
- US-A- 3 771 294

## Description

### Background of the invention

The object of the invention is a method as defined in the preamble of claim 1.

The object of the invention is also a separating device according the preamble of claim 12 for a material conveying system.

The object of the invention is also a material conveying system according the preamble of claim 19.

A method, a separating device and a material conveying system according to the preambles of claims 1, 12 and 19 are known from WO 2009/061264 A1.

The invention relates generally to pneumatic material conveying systems, such as to partial-vacuum transporting systems, more particularly to the collection and conveying of wastes, such as to the conveying of household wastes.

Systems wherein wastes are conveyed in piping by means of suction and/or transporting air are known in the art. In these, wastes are moved long distances in the piping pneumatically, by means of suction and/or a pressure difference, together with the transporting air. The apparatuses are used for, among other things, the conveying of wastes in different institutions, for the conveying of household waste or for the conveying of other waste. It is typical to these systems that a partial-vacuum apparatus is used to achieve a pressure difference, in which apparatus a partial vacuum is achieved in the conveying pipe with partial-vacuum generators, such as with vacuum pumps or with an ejector apparatus. A conveying pipe typically comprises at least one valve means, by opening and closing which the replacement air coming into the conveying pipe is regulated. Systems wherein a pressure difference and/or a transporting air flow is/are achieved in the conveying piping by means of e.g. a blowing arrangement are also known in the art. One of the convenient solutions of new regional building projects is waste management that will operate with a pipe transport system. This means that sorted wastes are sucked along underground pipes to a waste station that is common to the whole region. The system is clean, odorless and noise-free, and is also a more environmentally friendly solution than conventional waste management and a safer solution from the viewpoint of the adjacent area. In regional building sites in which it has been decided to use a pneumatic pipe transport system in waste transportation, it is typical that it is necessary to build conveying piping to completion and a shared waste station for the region even though the whole construction project would progress slowly and in stages. In this case it is necessary to build the system to completion in respect of the conveying piping and the waste station, although the construction project might last for years or even decades. The capacity of the piping and of the waste station of the system has, however, been made ready taking into account the amount of users to be realized at some time in the future. A waste station is conceived to typically comprise also means for achieving a pressure difference in the piping, e.g. partial-vacuum generators, such as vacuum pumps or corresponding. In this case in the initial phase of a construction project a situation is encountered wherein it is necessary to make sizable investments in equipment, even though the designed full capacity will not be needed in the system for years yet. On the other hand, there are a lot of quite small sites, such as office properties, commercial properties, industrial properties and especially residential properties or other sites, in which it is desired to achieve a pneumatic pipe transport solution for wastes, but which are not economically viable to equip with their own partial-vacuum generating apparatus or with a separating device and a separate container. A system is know in the art, wherein the suction devices of a partial-vacuum system are connected to a tanker vehicle, which goes to suck wastes at regular intervals, e.g. daily, into its own container and transports them away. These types of solutions are presented e.g. in publication EP0093825 A1, in which a vehicle provided with vacuum means goes to empty a container disposed below a refuse chute. On the other hand, a corresponding solution is known from publication WO 2006/135296, wherein a collection vehicle is provided with vacuum means and goes to suck the wastes of a system into its own container. The vehicles of these solutions typically both suck, compress and transport waste. The vehicles are very large, heavy and noisy. This makes the vehicles needed awkward to use in cramped spaces, such as in old city centers. In addition, the vehicles needed become expensive in terms of costs. On the other hand, a part of the wastes is often such that, owing to its size or other attribute, it cannot be satisfactorily transported in the piping. In many cases an own arrangement, such as a separate waste container of its own, is needed for these. WO2009/061264A shows a method for the management of waste deposited in waste inlets and collected in under-ground waste containers that are emptied by opening a wall section thereof as the container is in a raised emptying position by a collecting vehicle.

The aim of the present invention is to achieve a new type of solution in connection with material conveying systems, by means of which solution the drawbacks of prior art solutions are avoided. Another aim of the invention is to achieve a solution for rather small systems in particular, in which it is not desired to use separate separating devices and waste containers. Yet another aim of the invention is to achieve a solution in which the emptying of input points pneumatically and the emptying of a collection container can be performed flexibly, and even independently of each other.

### Brief description of the invention

The invention is based on a concept wherein the separating device of a pneumatic pipe conveying system for material, in which separating device the wastes are separated from the transporting air, is a so-called deep collection container arranged in the ground or in the soil.

The method according to the invention is characterized by what is disclosed in the characterizing part of claim 1.

The method according to the invention may be further characterized by what is stated in claims 2 - 11.

The separating device, according to the invention, for a material conveying system is characterized by what is disclosed in the characterizing part of claim 12.

The separating device, according to the invention, for a material conveying system may be further characterized by what is stated in claims 13 - 18.

The material conveying system according to the invention is characterized by what is disclosed in the characterizing part of claim 19.

The material conveying system according to the invention may be further characterized by what is stated in claims 20 - 26.

The solution according to the invention has a number of important advantages. By means of the solutions of the invention the drawbacks of prior-art solutions can be avoided. By using a deep collection container as a separating device, the material conveyed into the collection container can be efficiently stored, and emptying of the container can be performed less frequently. Emptying of the collection container can be performed by lifting the collection container and by transferring the material that has collected in the container from an openable and closable aperture arranged in the bottom part of the container into the container of a transport means, such as of a garbage truck. The transport means can comprise a press for compressing the material so it becomes denser and a hoist for lifting the collection container. With the solution according to the invention, the separating device of a pneumatic pipe transport system for material and the collection container intended for temporary storage of the transported material can be efficiently combined. When the collection container is a so-called deep collection container, which is at least partly embedded to below the surface level of the ground, or corresponding surface level, the space requirement can be efficiently reduced. By arranging most of the volume of the collection container below the surface of the ground, and a relatively small part to be the visible part, a very environmentally suitable solution for a collection container is achieved. Owing to the large volume and the dimensions of the container, the collected material settles, i.e. compacts, in which case relatively more material fits into the collection container than into many small containers. When the collection container is arranged deep in the ground, the deep collection container remains colder in the summer, in which case any odor nuisance possibly caused by wastes is smaller. According to one preferred embodiment the deep collection container-separating device comprises a collection container and an external container, into which the collection container is arranged and from which the collection container is lifted for emptying. The solution according to the invention is suited for use in connection with many different types of pneumatic pipe transport systems for material. Systems using blowing for the conveying of material come into question also, in addition to partial-vacuum systems. When using partial-vacuum generating apparatus to achieve the pressure difference/transporting air flow needed in the conveying piping, a mobile partial-vacuum generating apparatus can be used effectively in connection with a material conveying system comprising the deep collection separating device of the invention to achieve the partial vacuum needed in the pneumatic transportation of material. In this case a dedicated fixed partial-vacuum generating apparatus is not needed in individual material conveying systems. The system thus enables the division of effective operating time of the partial-vacuum source between a number of material conveying systems. The system also enables the offering of the partial-vacuum source of the material conveying system as a service to properties. In addition, the invention enables an effective way to ensure material conveying by using a number of mobile partial-vacuum sources, in which case e.g. in a malfunction situation a primary partial-vacuum source can easily be replaced with a second mobile backup apparatus. The mobile partial-vacuum source according to the invention fits to function in more cramped locations also because it can be arranged in a vehicle in which space for wastes is not needed at the same time. The solution according to the invention effectively enables a different frequency for operation of the partial-vacuum source and for emptying of a container. According to an embodiment of the invention it is also conceivable that the partial-vacuum source arranged in the proximity of the deep collection separating device or separating devices is e.g. an immobile suction pump container or corresponding, with which the air flow/partial vacuum for conveying material from input points into the separating device is handled. This solution is particularly suitable in situations in which there are a number of deep collection separating devices in the same connection. The solution according to the invention offers the possibility to use an existing garbage truck or corresponding for emptying the collection container of the deep collection-separating device. The deep collection container/separating device according to the invention also gives the possibility for feeding in, via an openable and closable input aperture formed in the collection container, the type of material which is not, e.g. owing to its size or other properties, suited for conveying in a pneumatic pipe transport system for material. In the deep collection container-separating device according to the invention the flow of transporting air is acted upon in the chamber space of the separating device or in the output channel by bringing about a guiding effect for the transporting air in the opposite direction with respect to its direction of rotation. With this it is possible to significantly improve the material to be separated being prevented from displacing along with the transporting air towards the output channel. In this case e.g. waste particles, such as papers or plastic films or bags, do not get into the output aperture of the separating device and/or block the output aperture, and an operationally reliable deep collection container-separating device for a pneumatic wastes conveying system can be achieved. The desired effect can be achieved by arranging an output branch coupling in the wall of the output channel such that a flow of the transporting air from the output channel into the output branch coupling is achieved in a mainly tangential direction with respect to the wall of the output channel. This can be achieved e.g. by arranging the output branch coupling eccentrically in the output channel. The deep collection separating device according to the invention is suited to both material conveying systems, in which a formatter, i.e. a rotary shaper, is used to compact and/or shape the material to be conducted into the conveying piping from the input points, and to ordinary pneumatic pipe transport systems for material, in which systems material is fed in from an input point directly into the conveying piping.

### Brief description of the figures

In the following, the invention will be described in more detail by the aid of an embodiment with reference to the attached drawings, wherein
Fig. 1 presents a simplified diagram of one system according to an embodiment of the invention,
Fig. 2 presents an embodiment of a device according to an embodiment of the invention, partially sectioned in the vertical plane,
Fig. 3 presents an embodiment of a device according to an embodiment of the invention, from above, i.e. from the direction of the arrow A of Fig. 2,
Fig. 4 presents a part of a device according to an embodiment of the invention, partially sectioned in the vertical plane and with the collection container removed,
Fig. 5 presents a device according to an embodiment of the invention, in a first operating mode,
Fig. 6 presents a device according to an embodiment of the invention, from above, i.e. from the direction of the arrow B of Fig. 5, in a first operating mode,
Fig. 7 presents a device according to an embodiment of the invention, in a second operating mode,
Fig. 8 presents a second embodiment of a device according to the invention, partially sectioned in the vertical plane,
Fig. 9 presents a second device according to an embodiment of the invention, from above, i.e. from the direction of the arrow C of Fig. 8,
Fig. 10 presents one embodiment of the device according to the invention,
Fig. 11 presents a device according to a second embodiment of the invention, in a first operating mode, and
Fig. 12 presents a device according to a second embodiment of the invention, in a second operating mode.

### Detailed description of the invention

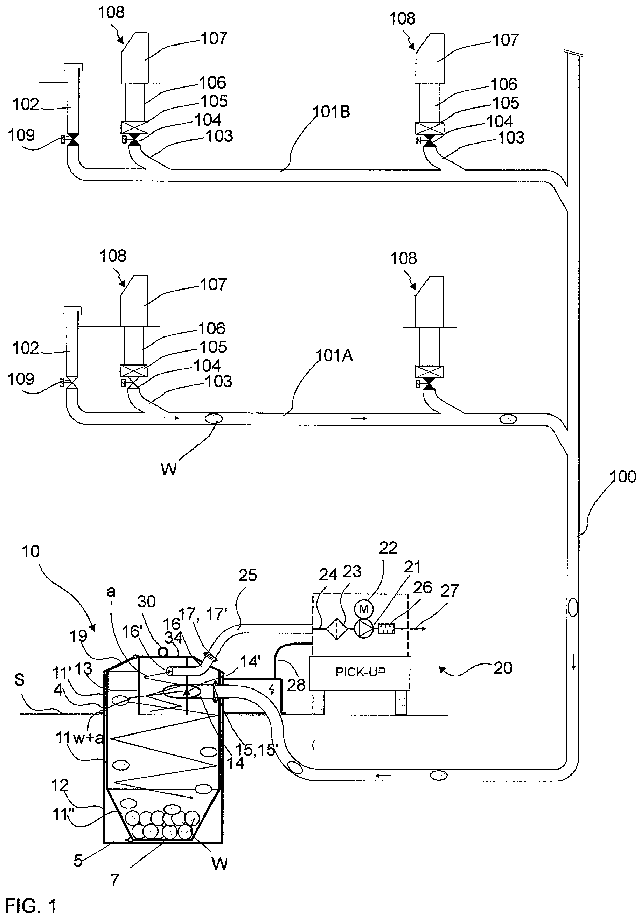

Fig. 1 presents a part of a pneumatic material conveying system, which part comprises a material conveying pipe 100, along the side of which at least one, typically many, input points 108 are arranged. The input point 108 is a feed-in station of material, more particularly of waste material, intended to be transported, from which station the material, more particularly waste material, such as household waste, or recyclable material intended to be transported is fed into the conveying system. The feed-in station 108 can also be a refuse chute, into which material is fed from input apertures on different floors of a building. The system can comprise a number of feed-in stations 108, from which the material intended to be transported is fed into conveying piping 100, 101 A, 101 B. By opening and closing a shut-off means, such as a valve means 104, that is possibly in connection with the feed-in station, material can be conveyed from an input point 108 into the conveying pipe 100. The input point 108 is connected on the valve side to a conveying pipe 100 or to an input pipe 103 in connection with it. Typically conveying piping comprises a main conveying pipe 100, to which it has been possible to connect a number of branch conveying pipes 101 A, 101 B and in turn to which branch conveying pipes it has been possible to connect a number of feed-in stations 108. In the embodiment of Fig. 1 the input point 108 is an input point 107 of waste material, said input point 107 being disposed on the surface of the ground. The input point 108 is connected via a feeder channel 106 to a material shaper 105, which shapes and compacts the material to suit the conveying piping 103, 101 A, 100, which is smaller in diameter than the feeder channel. The solution according to the invention is also suited to those types of material conveying systems in which material shapers are not used, but instead the material is conveyed from input points directly into the conveying piping. The conveying piping can be arranged to travel underground. In the embodiment of the figure the conveying piping comprises replacement air ducts 102, in which a replacement air valve 109 is arranged. Fig. 1 presents an operating phase in which the material W is conveyed from the input point 108, on the extreme left in the figure, of the first branch conveying pipe 101 A. In the conveying situation, the valve means 104 between the feed-in station and the conveying piping is open and the replacement air valve 109 of the replacement air duct 102 is open.

An essential device in the invention is the separating device 10, which is according to the invention a combination of a deep collection container for material, which is formed from an external container 12 and a collection container 11, and of means arranged in it separating the transporting air and the material being conveyed from each other. According to one embodiment the separating device is a so-called cyclone separator. The conveying pipe 100 can be connected to a collection container 11 of the separating device 10, in which collection container the material W being transported is separated from the transporting air. A connecting means 15' is formed in the conveying pipe 100 and a counterpart 15 in the branch coupling 14 formed in the top part of the collection container 11. The connecting means 15' and the counterpart 15 together form e.g. a snap-on coupling. A second connection 17 is formed in the output branch coupling 16 for transporting air arranged in the collection container 11, into which connection a pipe or a hose 25 coming from the partial-vacuum source 21 can be connected with a counterpart 17' or via the output branch coupling 16 transporting air can be conducted out of the collection container. The external container 12 of the deep collection container is embedded to below the surface S of the ground or corresponding. All the planes from which material can be dropped into the container and correspondingly from which the emptying of the container can be performed can be regarded as a corresponding surface. The walls of the external container 12 are vertical and formed from a cylindrical container of steel or other material, such as reinforced plastic, that is closed at the bottom and open at the top. The container is preferably sunk into the ground, into a cavity made for the purpose, in such a way that most of the volume of the container is situated below the surface S of the ground. In the embodiment of Fig. 1 the side wall 4 of the external container continues to above the surface S of the ground. In the embodiment of the figure, the cross-sectional area of the external container on the horizontal plane is constant, but it can be increasingly larger on the horizontal plane going upwards, in which case the external container expands slightly upwards in a conical manner.

The means for achieving a pressure difference and/or a transporting air flow in the conveying pipe comprise at least one partial-vacuum source 21 or pressure source or fan, by the aid of the suction or pressure difference or transporting air flow achieved by which material is conveyed in the conveying pipe. In the embodiment of the figure, the partial-vacuum source 21 is mobile. According to the embodiment of Fig. 1 the partial-vacuum source 21 is a mobile apparatus arranged in a mobile means 20, e.g. in a vehicle. The mobile means 20 can be e.g. a small lorry or a van or the partial-vacuum source 21 can be arranged in a trailer, which can be towed by a vehicle. The partial-vacuum source 21 in Fig. 1 comprises a pump unit, comprising a partial-vacuum generator, such as a vacuum pump, and the drive device 22 driving it. The suction side of the partial-vacuum generator is connected in a first operating phase to a collection container 11 via a medium pathway 24, 25, 16. In this case the suction/pressure difference needed in the conveyance of material can be achieved into the collection container 11 and into the conveying piping 100, 101A, 101 B. There is a filtering device 23 between the partial-vacuum source 21 and the collection container 11. On the blowing side of the partial-vacuum source 21 is an outward blowing channel 27, which in the embodiment of the figure comprises a sound diffuser 26. A mobile partial-vacuum source 21 can be connected to a second connection 17 of the container 11 with a counterpart 17' arranged in the hose 25, which hose 25 is at its second end arranged into a partial-vacuum source, into its suction channel 24. On the blowing side of the partial-vacuum source 21 is a medium pathway to an outward blowing channel 27.

The drive device 22 of the partial-vacuum source 21 is, according to one embodiment, a motor e.g. an electric motor. The electricity needed is obtained in this case e.g. with a conductor 28 e.g. from the socket of an electricity network, which socket is situated most suitably in the proximity of the collection container 11 of the material conveying system to be emptied. The mobile means 20, such as a conveying vehicle, can also be wholly or partly driven by an electric motor, in which case its accumulators can be charged at the same time as the partial-vacuum generator 21 is used. According to a second embodiment the partial-vacuum source is arranged in the proximity of the separating device more rigidly than the mobile solution, e.g. in premises, such as in a container or corresponding, arranged in the proximity of the separating device.

The separating device 10 is, according to the invention, a so-called deep collection container, which comprises in one embodiment an external container 12 and a collection container 11. The external container 12 is, in the embodiment of the figure, a pit or a container arranged in the ground or in the soil, said pit or container having a base 5 and a side wall 4. The external container 12 extends from surface level s downwards for some distance. In the embodiment of Fig. 1 a separate collection container 11, which is fitted into the external container 12, is arranged for the external container. In the embodiment of the figure, the top part of the collection container 11 extends to above surface level S.

In the embodiment of the figure, the collection container 11 of the separating device 10 is a so-called cyclone separator comprising a chamber space that is bounded by side walls 11', 11", a bottom hatch 7 and a top end wall 34. The chamber space is wider at its top part 11', mainly cylindrical and tapers conically at its bottom part 11" towards the base, in which is an output aperture 6 and a hatch 7 opening and closing said aperture. An input branch coupling 14 is connected to the wall of the collection container 11 of the separating device, to the top part 11' of it, via which branch coupling the material to be transported, such as waste material, is conducted together with the transporting air into the chamber space of the separating device from the input aperture 14'. The input aperture 14' is arranged in the wall of the chamber space of the separating device, in the top part of its side wall.

In the embodiment of the figure, the input aperture 14' of the input branch coupling 14 into the collection container 11 is arranged in the wall of the separating device, in the top part 11' of said wall, in the area between the butt end wall 34 and the bottom part of the wall 13 of the output channel extending into the inside part of the separating device. The separating device 10 in the collection container 11 thus comprises a ring-like section in the aforementioned area, in which the wall 13 forms the inner rim of the ring-like section and the wall 11' of the collection container, typically the top part of the wall, forms the outer rim of the ring-like section.

In the embodiment of the figures, the input branch coupling 14 and the input aperture 14' are arranged in the wall 11' of the collection container 11 in such a way that the transporting air a and the solid particles w (i.e. the material) are fed into a mainly tangential movement in the collection container 11, in the top part of it.

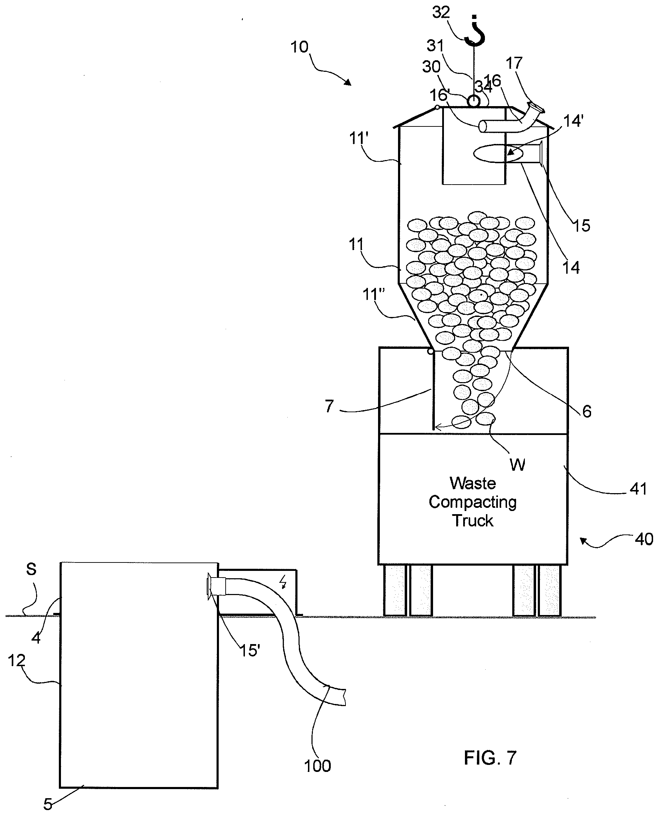

In the embodiment of the figure, the material w, such as waste material, separated from the transporting air drifts to the bottom part of the collection container 11. In Fig. 1, the drifting of the separated material to the bottom part of the collection container 11 of the separating device 10 is described with an arrow. The material w is presented in the figure as grey. The separated material is removed, e.g. according to need, from the collection container. This material removal phase is presented in the following and e.g. in Fig. 7, in which the collection container is lifted from the external container 12 with lifting means 30, 31, 32 (the lifting device itself is not presented), into the container 41 of a transport means such as of a garbage truck 40, e.g. via an output aperture 6 for material arranged in the bottom part of the collection container 11, e.g. by opening the hatch 7 closing the output aperture 6.

The transporting air is conducted from the separating device with an output branch coupling 16 for the transporting air. The transporting air is typically deflected in the separating device, in which case the heavier material accompanying the transporting air separates from the transporting air more easily.

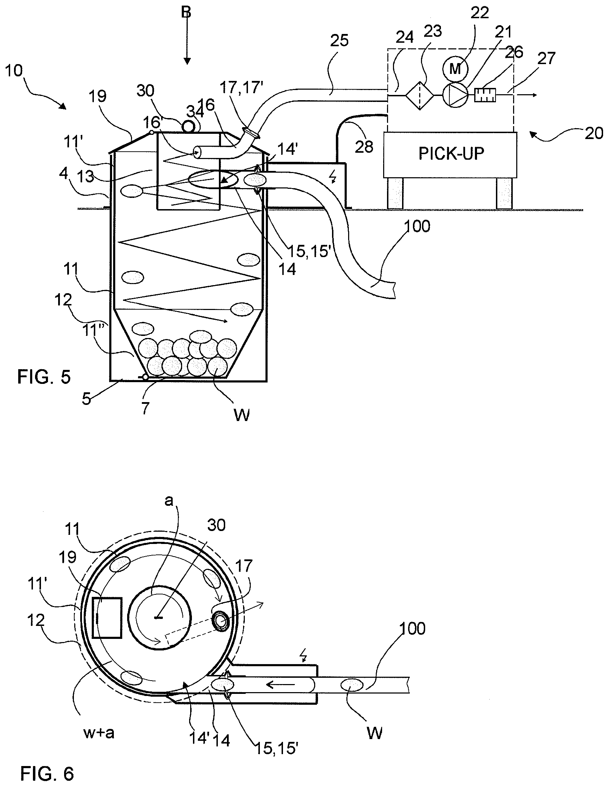

In the embodiment of Figs. 1, 5 and 6, a wall part 13 is arranged in the top part of the collection container 11 of the separating device, which wall part extends into the chamber space of the separating device. In the embodiment of the figure, the wall part 13 is cylindrical. In the figure, the wall part is on the same axis as (is coaxial with) the vertical axis of the collection container 11 of the separating device. An output channel is formed on the inside of the rim of the wall part 13, into which output channel the aperture of the bottom part of the wall 13 leads. There is a connection from the top part of the output channel via the output aperture 16' to the output branch coupling 16 for the transporting air.

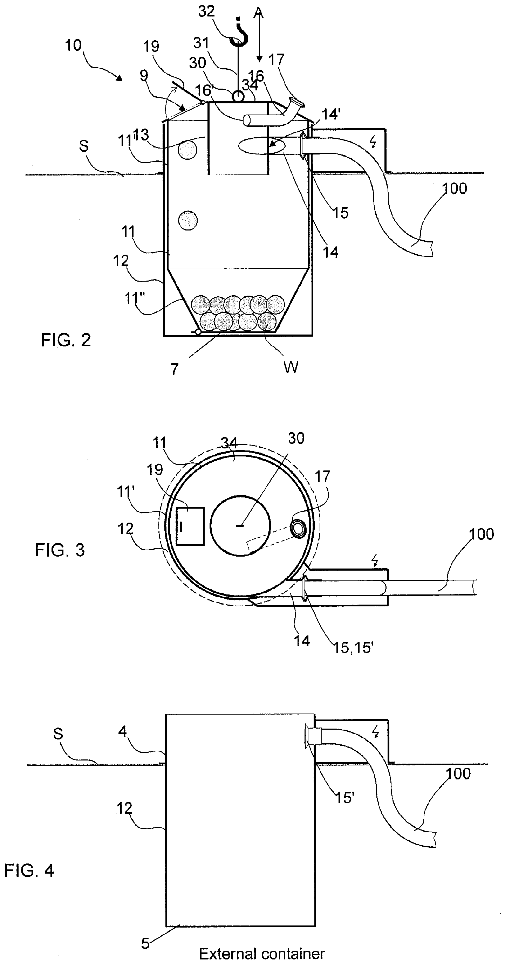

In the embodiment of the figure, the lower end of the cylindrical wall part 13 is thus open. The output branch coupling 16 is, in the embodiment of Figs. 1 and 2, arranged in the collection container 11 of the separating device in such a way that the transporting air is exhausted in a mainly tangential movement from the top part of the collection container 11.

A tangential movement has been achieved for the outgoing transporting air in the output channel bounded by the wall part 13, which movement is preferably in the opposite direction with respect to the tangential movement of the transporting air (and the particles transported along with it) (w+a) in the collection container 11 of the separating device, at least in the proximity of the input branch coupling 14 in the chamber space. The movement of the transporting air in the separating device is roughly illustrated with arrows, where an arrow a presents the movement of the transporting air leaving the separating device and w+a the movement of the transporting air and waste particles coming into the separating device at least in the proximity of the input aperture.

The tangential movement of the transporting air is thus opposite with respect to the rotation direction of the tangential movement of the transporting air coming into the separating device from the input branch coupling 14. In this case the rotating movement of the transporting air coming in from the chamber space of the collection container 11 is neutralized in the output channel 13, or in the proximity of it, and the speed of the transporting air decelerates. With this procedure the easy ascent of detrimental particles, such as paper and plastic, along with the transporting air from the chamber space of the collection container 11 of the separating device into the output channel 13 is prevented.

According to one embodiment the drive device 22 of the partial-vacuum generator can be a mobile unit 20, e.g. the engine of a vehicle. According to the embodiment in question, the partial-vacuum generator can, for instance, be used at the operating site even if electric current were not available from an electricity network.

The material fed in is transported along the conveying piping 100, 101A, 101 B to a container 11, in which the material being transported separates, e.g. due to the dropping of speed and due to centrifugal force, from the transporting air.

When the suction side of the partial-vacuum generator 21 is connected directly or via a transporting air duct to the container 11, to which the discharge end of a conveying pipe 100 is in turn connected, a partial vacuum is achieved in the conveying pipe 100. In this case the suction acts in the conveying pipe 100 via the medium pathway connecting to the container. A feed valve 104 is between the main conveying pipe 100 and the branch conveying pipe 101A and an input point 108, which valve is open in this operating phase. In this case the suction is able to act also in the feeder channel 106 of an input point 108 and in a possible shaper device 105. In this case the material batch intended to be conveyed is conveyed into the branch conveying pipe 101A and onwards into the main conveying pipe 100. Possible replacement air comes into the conveying pipe e.g. via the input point 108 when opening the valve 104 to the conveying pipe. When the valve 104 of an input point is closed, the valve 109 of the replacement air duct 102 can be opened for receiving replacement air into the conveying pipe 101 A, 100.

The waste material is conveyed along the conveying piping 101 A, 100 to the container 11, where the transporting air separates from the waste material and the waste material remains in the collection container 11.

Next the other input points 108 are emptied according to need, according to the emptying sequence or according to need.

Instead of a partial-vacuum generating apparatus, a blowing device can be used to achieve the pressure difference/transporting air flow needed in the conveying pipe. In this case blowing is achieved in the conveying pipe, e.g. in the material to be transported to the opposite side with respect to the separating device 10, by the aid of which blowing material is conveyed along the conveying pipe e.g. via the input branch coupling 14 into the collection container 11 of the separating device, in which container the material separates from the transporting air and the transporting air is conducted via the output branch coupling 16 for the transporting air out from the collection container 11, from its chamber space.

The collection container 11 can be arranged according to Figs. 2, 3 in a space bounded by the walls 4, 5 of the external container 12. When the joint 15, 15' between the input branch coupling 14 and the conveying pipe 100 is opened and, correspondingly, the joint 17, 17' between the output branch coupling 16 and the suction pipe 25 coming from the partial-vacuum source is opened, the collection container 11 can be lifted with lifting means 30, 31, 32 from above out of the open external container 12 for emptying. Fig. 4 presents an external container, from which the collection container 11 has been removed.

When it is desired to feed in wastes of large size, which do not fit into the conveying piping, a filling aperture 9 can be made in the collection container 11, e.g. in the top part of the container. The filling aperture of the collection container is provided with a hatch 19.

Fig. 7 presents the emptying phase of a collection container. The emptying can be performed according to need, and e.g. less frequently than the suction phase presented above, in which the material is conveyed from input points into the collection container of the separating device. The collection container is lifted with lifting means 30, 31, 32, e.g. with the hoist of a transport vehicle 40 in such a way that the bottom part 11' of the collection container and its emptying aperture 6 are configured face-to-face with the input aperture of the transport vehicle so that when the hatch 7 covering the emptying aperture of the collection container is opened, the material w displaces from the collection container into the container 41 of the transport vehicle, after a possible compression phase.

It is also possible that the waste transport vehicle is provided with a partial-vacuum source 21, and in this case it first conveys, in a suction phase, the material from input points 108 into the collection container and then it lifts the collection container 11 so that the material is emptied from the collection container 11 into the container 41 of the transport vehicle 40, after a possible compression phase.

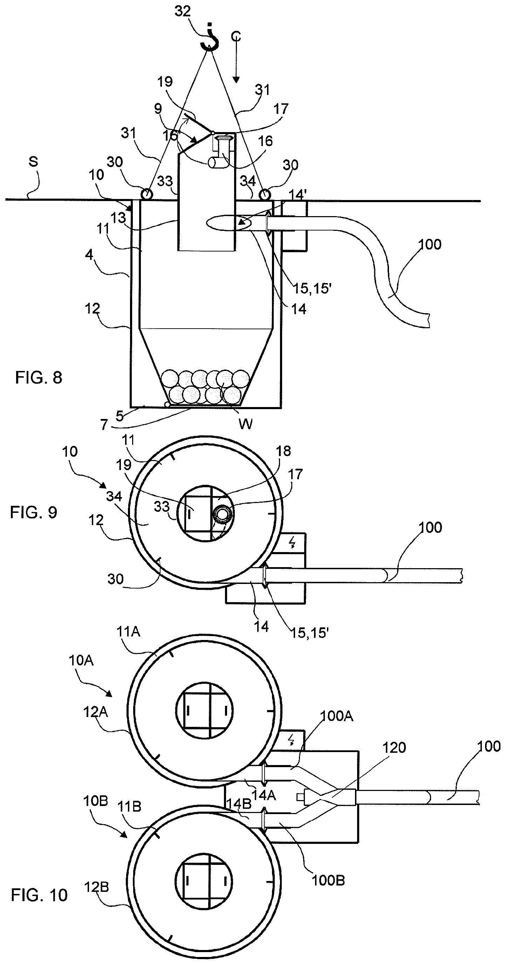

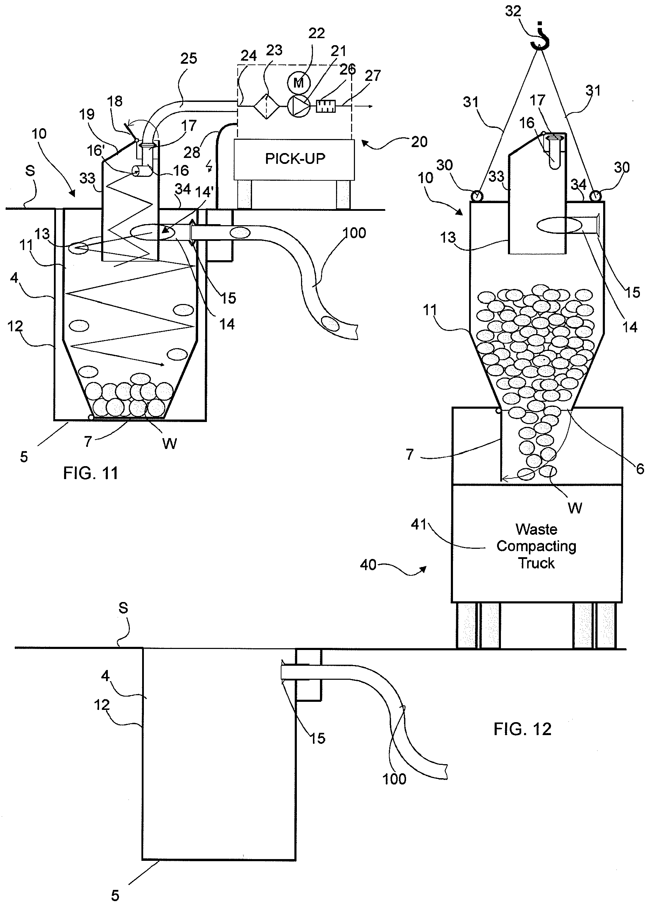

In the embodiment of Figs. 1-7 the collection container 11 of the separating device has in its top part a top wall 34, the edge areas of which slope downwards towards the outer edge. In one embodiment the edge of the top wall extends to outside the wall 11' of the collection container 11, forming an eave. According to one embodiment the edges of the top wall extend to outside the rim formed by the wall 4 of the external container 12 as viewed from above. An input aperture 9, comprising an openable and closable hatch 19 for feeding material directly into the collection container, is formed in the top wall. In the embodiment of the figures a second hatch 18 is formed in the top wall, in the space below which hatch is a connection 17 for connecting the suction pipe 25. According to Fig. 4 the wall 4 of the external container can extend to above the surface level. The input hatch 19 and the input aperture 9 below it are arranged at a suitable height for feeding in material. Lifting means 30, 31, 32, such as a lifting lug 30, are arranged on the top wall for lifting, to which lifting means a lifting sling, lifting cable or lifting chain 31 can be fixed and then lifted with the lifting hook 32 of the hoisting device. In the embodiment of Figs. 1 - 7 there is one lifting lug 30, but there can be a number of them. For example in the embodiment of Figs. 8 - 12 there are three lifting lugs 30.

The embodiment of Figs. 8 - 12 comprises a different top part of the collection container 11. In it the top wall 34 of the container is arranged to be on the level of the surface s when the collection container is arranged inside the external container 12. Extending upwards from the top wall is the wall 33 of the input point, in the top part of which wall is arranged the input aperture 9 and an openable and closable hatch 19. Also in this embodiment there is a second hatch 18, in the space below which is a connection 17 for the suction pipe 25.

Fig. 10 presents an embodiment, in which two separating devices 10A, 10B are arranged in the conveying pipe 110. A valve means 120 is arranged in the conveying pipe, with which valve means the input of material can be guided into either the separating device 10A, or 10B. From the valve means 120 on the side of the separating device are two pipe branches 100A, 100B, of which the first branch is connected to the input branch coupling 14A of the collection container 11 A of the first separating device 10A. The second branch 100B is connected to the input branch coupling 14B of the collection container 11 B of the second separating device 10B. The embodiment of Fig. 10 can be applied e.g. in a situation in which there are two different wastes in the material being conveyed, in which case a part of the input points are emptied into the collection container 11A of the first separating device 10A and a second part of the input points are emptied into the collection container 10B of the second separating device 10B. According to a second embodiment, the separating devices 10A, 10B of Fig. 10 can be used to provide more capacity, in which case the emptying interval of the containers can be lengthened. In this case when the first container 11A fills, the material coming from the conveying pipe is guided with the valve means 120 into the second container 11 B. The containers can be emptied in one go.

According to one embodiment the depth in the deep collection container, i.e. of the external container 12 of the separating device 10, according to the invention from the surface s of the ground is approx. 3 meters and the diameter of the external container 12 is approx. 2 meters. The diameter can, of course, range according to the point of application, e.g. 1000-3000 mm. The depth of embedding of the external container, i.e. the distance of the base of the container from the surface S of the ground, can range according to the point of application, e.g. 2000-4000 mm. When the collection container 11 is a deep collection container according to the invention, the material w that has collected in the container is compressed more densely in the container when the amount of material in the container increases. Owing to this it is possible to save space, the separating device can be made to match the environment and the emptying of it is convenient. In addition, the partial-vacuum source and the emptying of the input points can be performed conveniently, e.g. with a separate mobile partial-vacuum source or with a partial-vacuum source in connection with a garbage truck.

The invention thus relates to a method according to claim 1.

According to one embodiment the means for achieving a pressure difference and/or a transporting air flow in the conveying pipe comprise at least one partial-vacuum source 21, by the aid of the suction or pressure difference or transporting air flow achieved by which material is conveyed in the conveying pipe.

According to one embodiment the means for achieving a pressure difference and/or a transporting air flow in the conveying pipe comprise at least one pressure source or fan, by the aid of the pressure difference or transporting air flow achieved by which material is conveyed in the conveying pipe.

According to one embodiment in the method the means for achieving a pressure difference and/or a transporting air flow in the conveying pipe are arranged in a mobile means 20, such as in a vehicle or a trailer, which means for achieving a pressure difference and/or a transporting air flow are connected to the material conveying system, and the partial vacuum/pressure difference/transporting air flow needed for the conveyance of material in the system is achieved, in which case material W is transferred along the conveying piping 100, 101 A, 101B to a collection container 11.

According to one embodiment in the method the collection container 11 is emptied into the container space 41 of a transport means 40, in which container space the material is preferably compressed to be denser, and which transport means 40 transports the material away.

According to one embodiment the collection container 11 is lifted in the emptying phase from the external container 12, in which it is at least partly, and after the emptying phase the emptied collection container 11 is lowered back into the external container 12.

According to one embodiment the means for achieving a pressure difference and/or a transporting air flow in the conveying pipe are used as the means for achieving a pressure difference and/or a transporting air flow in the conveying pipe of a number of different material conveying systems, in which case the means for achieving a pressure difference and/or a transporting air flow in the conveying pipe are transferred with a mobile means 20 to the proximity of each material conveying system and connected with connection means to the material conveying system.

According to one embodiment the operating interval in connection with a material conveying system of the means for achieving a pressure difference and/or a transporting air flow in the conveying pipe is more frequent than the emptying interval of the collection container 11.

According to one embodiment material is fed into the collection container 11 also directly, from an input aperture 9 arranged in the top part of the container.

According to one embodiment in the method material is fed into a conveying pipe 100 from the input points 108 of material, which are the input points of waste, such as waste receptacles or refuse chutes.

According to one embodiment in the method the material conveying system is a waste conveying system.

The invention also relates to a separating device according to claim 12.

According to one embodiment the deep collection container-separating device comprises an actual collection container 11 and an external container 12.

According to one embodiment the top part of the collection container 11 comprises an input aperture 9.

According to one embodiment the collection container 11 narrows at least in the bottom part towards the output aperture 6.

According to one embodiment an output branch coupling 16 is arranged in the output channel of the collection container 11 in a mainly tangential direction with respect to the wall 13 of the output channel.

According to one embodiment the device comprises means for bringing the transporting air and the material coming with it w+a initially into a rotating movement in the collection container 11 in a first direction with respect to the vertical axis of the collection container, and for bringing the outgoing transporting air a into a rotating movement in a mainly opposite direction of rotation.

According to one embodiment the external container 12 is embedded to below ground level S at least partly.

The invention also relates to a waste conveying system according to claim 19.

According to one embodiment the means for achieving a pressure difference and/or a transporting air flow in the conveying pipe comprise at least one partial-vacuum source 21, by the aid of the suction or pressure difference or transporting air flow achieved by which material is conveyed in the conveying pipe.

According to one embodiment the means for achieving a pressure difference and/or a transporting air flow in the conveying pipe comprise at least one pressure source or fan, by the aid of the pressure difference or transporting air flow achieved by which material is conveyed in the conveying pipe.

According to one embodiment the means for achieving a pressure difference and/or a transporting air flow in the conveying pipe are arranged in a mobile means 20, such as in a vehicle or a trailer, which means for achieving a pressure difference and/or a transporting air flow are connected to a waste conveying system, and the partial vacuum/pressure difference/transporting air flow needed for the conveyance of waste material in the system is achieved, in which case waste material is transferred along the conveying piping 100, 101 A, 101B to a collection container 11.

According to one embodiment the collection container 11 is configured to be emptied into the container space 41 of a transport means 40, in which container space the material is preferably compressed to be denser, and which transport means 40 transports the material away.

According to one embodiment the means for achieving a pressure difference and/or a transporting air flow in the conveying pipe are configured to function as the means for achieving a pressure difference and/or a transporting air flow in the conveying pipe of a number of different material conveying systems, in such a way that the means for achieving a pressure difference and/or a transporting air flow in the conveying pipe are transferred with a mobile means 20 to the proximity of each material conveying system for connecting with connection means to the material conveying system.

According to one embodiment the input points 108 of material are the input points of waste, such as waste receptacles or refuse chutes.

According to one embodiment there are a number of separating devices 10A, 10B, to which a conveying pipe 100 can be connected in a selective manner with a valve means 120.

The mobile partial-vacuum source presented e.g. in publication WO2011151522, or an ordinary partial-vacuum source arranged in the proximity of the separating device, e.g. in a container, can be used in the system and method according to the invention.

The separating device according to the invention, i.e. a deep collection container-separating device, is also suitable in connection with those types of pneumatic pipe transport systems for material in which the material is moved by means of a pressure difference/transporting air flow. Such types are e.g. systems in which the conveying pipe is blown into, for conveying the material arranged into it along the conveying pipe into a deep collection container-separating device. In this case the transporting air is arranged to be removed from the separating device, from its collection container 11, e.g. via the output branch coupling 16 for transporting air. Correspondingly, the method and apparatus are also suited for use also in those cases in which material is conveyed by means of a pressure difference/transporting air flow achieved in the conveying pipe by blowing means.

It is obvious to the person skilled in the art that the invention is not limited to the embodiments presented above, but that it can be varied within the scope of the claims presented below.

## Claims

1. Method for handling material in a pneumatic material conveying system, which conveying system comprises at least one input point (108) of material, a material conveying pipe (100), which can be connected to an input point (108), and a separating device or a container (11), in which the material to be transported is separated from the transporting air, and also means for achieving a pressure difference and/or a transporting air flow in the conveying pipe (100) at least during the transportation of material, wherein in the method the
separating device is a deep collection container-separating device (10), into which material is conveyed from input points (108) via a conveying pipe (100), wherein in the
emptying phase the collection container (11) is lifted with lifting means and the material (w) that has collected in the collection container (11) is emptied via an openable and closable aperture (6) arranged in the bottom part of the collection container (11),
**characterized in that** the collection container (11) is functioning as a cyclone separator.

2. Method according to claim 1, **characterized in that** the means for achieving a pressure difference and/or a transporting air flow in the conveying pipe comprise at least one partial-vacuum source (21), by the aid of the suction or pressure difference or transporting air flow achieved by which material is conveyed in the conveying pipe.

3. Method according to claim 1 or 2, **characterized in that** the means for achieving a pressure difference and/or a transporting air flow in the conveying pipe comprise at least one pressure source or fan, by the aid of the pressure difference or transporting air flow achieved by which material is conveyed in the conveying pipe.

4. Method according to any of claims 1 - 3, **characterized in that** in the method the means for achieving a pressure difference and/or a transporting air flow in the conveying pipe are arranged in a mobile means (20), such as in a vehicle or a trailer, which means for achieving a pressure difference and/or a transporting air flow are connected to the material conveying system, and the partial vacuum/pressure difference/transporting air flow needed for the conveyance of material in the system is achieved, in which case material (W) is transferred along the conveying piping (100, 101 A, 101B) to a collection container (11).

5. Method according to any of claims 1 - 4, **characterized in that** in the method the collection container (11) is emptied into the container space (41) of a transport means (40), in which container space the material is preferably compressed to be denser, and which transport means (40) transports the material away.

6. Method according to any of claims 1 - 5, **characterized in that** the collection container (11) is lifted in the emptying phase from the external container (12), in which it is at least partly, and after the emptying phase the emptied collection container (11) is lowered back into the external container (12).

7. Method according to any of claims 1 - 6, **characterized in that** the means for achieving a pressure difference and/or a transporting air flow in the conveying pipe are used as the means for achieving a pressure difference and/or a transporting air flow in the conveying pipe of a number of different material conveying systems, in which case the means for achieving a pressure difference and/or a transporting air flow in the conveying pipe are transferred with a mobile means (20) to the proximity of each material conveying system and connected with connection means to the material conveying system.

8. Method according to any of claims 1 - 7, **characterized in that** the operating interval in connection with a material conveying system of the means for achieving a pressure difference and/or a transporting air flow in the conveying pipe is more frequent than the emptying interval of the collection container (11).

9. Method according to any of claims 1 - 8, **characterized in that** material is fed into the collection container (11) also directly, from an input aperture (9) arranged in the top part of the container.

10. Method according to any of claims 1 - 9, **characterized in that** in the method material is fed into a conveying pipe (100) from the input points (108) of material, which are the input points of waste, such as waste receptacles or refuse chutes.

11. Method according to any of claims 1 - 10, **characterized in that** in the method the material conveying system is a waste conveying system.

12. Separating device for a pneumatic material conveying system, which comprises means for connecting a material conveying pipe (100) to the input aperture of the separating device and means for conducting away the transporting air from the chamber space of the separating device, wherein
the separating device is a deep collection container-separating device, which comprises means (30) for lifting the collection container (11) and which collection container (11) comprises an openable aperture (6) in the bottom part and, **characterized in that** the
collection container (11) is configured to function as a cyclone separator.

13. Separating device according to claim 12, **characterized in that** the deep collection container-separating device comprises an actual collection container (11) and an external container (12).

14. Separating device according to claim 12 or 13, **characterized in that** the top part of the collection container (11) comprises an input aperture (9).

15. Separating device according to any of claims 12 - 14, **characterized in that** the collection container (11) narrows at least in the bottom part towards the output aperture (6).

16. Separating device according to any of claims 12 - 15, **characterized in that** an output branch coupling (16) is arranged in the output channel of the collection container (11) in a mainly tangential direction with respect to the wall (13) of the output channel.

17. Separating device according to any of claims 12 - 16, **characterized in that** the device comprises means for bringing the transporting air and the material coming with it (w+a) initially into a rotating movement in the collection container (11) in a first direction with respect to the vertical axis of the collection container, and for bringing the outgoing transporting air (a) into a rotating movement in a mainly opposite direction of rotation.

18. Separating device according to any of claims 12 - 17, **characterized in that** the external container (12) is embedded to below ground level (S) at least partly.

19. Waste conveying system, which comprises at least one input point (108) of waste material, a material conveying pipe (100), which can be connected to at least one of said input points (108), and a separating device or container (11), in which the material to be transported is separated from the transporting air, and also means for achieving a pressure difference and/or a transporting air flow in the conveying pipe (100) at least during the transportation of material, wherein
the
separating device (10) is according to any of the preceeding claims 12-17,
wherein material is configured to be conveyed from input points (108) into said separating device (10) via said conveying pipe (100).

20. Waste conveying system according to claim 19, **characterized in that** the means for achieving a pressure difference and/or a transporting air flow in the conveying pipe comprise at least one partial-vacuum source (21), by the aid of the suction or pressure difference or transporting air flow achieved by which material is conveyed in the conveying pipe.

21. Waste conveying system according to claim 19 or 20, **characterized in that** the means for achieving a pressure difference and/or a transporting air flow in the conveying pipe comprise at least one pressure source or fan, by the aid of the pressure difference or transporting air flow achieved by which material is conveyed in the conveying pipe.

22. Waste conveying system according to any of claims 19 - 21, **characteriz ed** in that means for achieving a pressure difference and/or a transporting air flow in the conveying pipe are arranged in a mobile means (20), such as in a vehicle or a trailer, which means for achieving a pressure difference and/or a transporting air flow are connected to a waste conveying system, and the partial vacuum/pressure difference/transporting air flow needed for the conveyance of waste material in the system is achieved, in which case waste material is transferred along the conveying piping (100, 101A, 101 B) to a collection container (11).

23. Waste conveying system according to any of claims 19 - 22, **characteriz ed** in that the collection container (11) is configured to be emptied into the container space (41) of a transport means (40), in which container space the material is preferably compressed to be denser, and which transport means (40) transports the material away.

24. Waste conveying system according to any of claims 19-23, **characteriz ed** in that the means for achieving a pressure difference and/or a transporting air flow in the conveying pipe are configured to function as the means for achieving a pressure difference and/or a transporting air flow in the conveying pipe of a number of different material conveying systems, in such a way that the means for achieving a pressure difference and/or a transporting air flow in the conveying pipe are transferred with a mobile means (20) to the proximity of each material conveying system for connecting with connection means to the material conveying system.

25. Waste conveying system according to any of claims 19 - 24, **characteriz ed** in that the input points (108) of material are the input points of waste, such as waste receptacles or refuse chutes.

26. Waste conveying system according to any of claims 19 - 25, **characteriz ed** in that there are a number of separating devices (10A, 10B), to which a conveying pipe (100) can be connected in a selective manner with a valve means (120).

## Patentansprüche

1. Verfahren zur Handhabung von Material in einem pneumatischen Materialfördersystem, wobei das Fördersystem wenigstens eine Eingabestelle (108) für Material, ein Materialförderrohr (100), das mit einer Eingabestelle (108) verbunden sein kann, und eine Trennvorrichtung oder einen Behälter (11), in der bzw. dem das zu transportierende Material von der Transportluft getrennt wird, sowie ferner Mittel zur Erreichung einer Druckdifferenz und/oder einer Transportluftströmung in dem Förderrohr (100) wenigstens während des Transports von Material aufweist,
wobei in dem Verfahren die Trennvorrichtung eine Tiefensammelbehälter-Trennvorrichtung (10) ist, in die Material von Eingabestellen (108) aus über ein Förderrohr (100) befördert wird,
wobei in der Entleerungsphase der Sammelbehälter (11) mit Hebelmitteln angehoben wird und das Material (w), das sich in dem Sammelbehälter (11) angesammelt hat, über eine öffenbare und schließbare Öffnung (6) entleert wird, die in dem unteren Teil des Sammelbehälters (11) angeordnet ist,
**dadurch gekennzeichnet, dass** der Sammelbehälter (11) als ein Zyklonabscheider funktioniert.

2. Verfahren nach Anspruch 1, **dadurch gekennzeichnet, dass** die Mittel zur Erreichung einer Druckdifferenz und/oder einer Transportluftströmung in dem Förderrohr wenigstens eine Teilvakuumquelle (21) aufweisen, wobei mit Hilfe der Sog- oder Druckdifferenz oder der Transportluftströmung, die durch diese erreicht wird, Material in dem Förderrohr befördert wird.

3. Verfahren nach Anspruch 1 oder 2, **dadurch gekennzeichnet, dass** die Mittel zur Erreichung einer Druckdifferenz und/oder einer Transportluftströmung in dem Förderrohr wenigstens eine Druckquelle oder ein Gebläse aufweisen, wobei mit Hilfe der Druckdifferenz oder der Transportluftströmung, die durch diese bzw. dieses erreicht wird, Material in dem Förderrohr befördert wird.

4. Verfahren nach einem beliebigen der Ansprüche 1-3, **dadurch gekennzeichnet, dass** in dem Verfahren die Mittel zur Erreichung einer Druckdifferenz und/oder einer Transportluftströmung in dem Förderrohr in einer mobilen Einrichtung (20), wie beispielsweise in einem Fahrzeug oder einem Anhänger, angeordnet sind, wobei die Mittel zur Erreichung einer Druckdifferenz und/oder einer Transportluftströmung mit dem Materialfördersystem verbunden sind und das Teilvakuum / die Druckdifferenz / die Transportluftströmung, das bzw. die für die Beförderung von Material in dem System benötigt wird, erreicht wird, wobei in diesem Fall Material (W) entlang der Förderrohrleitung (100, 101A, 101B) zu einem Sammelbehälter (11) überführt wird.

5. Verfahren nach einem beliebigen der Ansprüche 1-4, **dadurch gekennzeichnet, dass** in dem Verfahren der Sammelbehälter (11) in den Behälterraum einer Transporteinrichtung (40) entleert wird, wobei in dem Behälterraum das Material vorzugsweise komprimiert wird, damit es dichter wird, und wobei die Transporteinrichtung (40) das Material abtransportiert.

6. Verfahren nach einem beliebigen der Ansprüche 1-5, **dadurch gekennzeichnet, dass** der Sammelbehälter (11) in der Entleerungsphase von dem äußeren Behälter (12), in dem er sich wenigstens teilweise befindet, aus angehoben wird und nach der Entleerungsphase der entleerte Sammelbehälter (11) zurück in den äußeren Behälter (12) hinein abgesenkt wird.

7. Verfahren nach einem beliebigen der Ansprüche 1-6, **dadurch gekennzeichnet, dass** die Mittel zur Erreichung einer Druckdifferenz und/oder einer Transportluftströmung in dem Förderrohr als die Mittel zur Erreichung einer Druckdifferenz und/oder einer Transportluftströmung in dem Förderrohr einer Anzahl unterschiedlicher Materialfördersysteme verwendet werden, wobei in diesem Fall die Mittel zur Erreichung einer Druckdifferenz und/oder einer Transportluftströmung in dem Förderrohr mit einer mobilen Einrichtung (20) bis zu der Nähe jedes Materialfördersystems überführt und über Verbindungsmittel mit dem Materialfördersystem verbunden werden.

8. Verfahren nach einem beliebigen der Ansprüche 1-7, **dadurch gekennzeichnet, dass** die Betriebszeit der Mittel zur Erreichung einer Druckdifferenz und/oder einer Transportluftströmung in dem Förderrohr in Verbindung mit einem Materialfördersystem häufiger auftritt als die Entleerungszeit des Sammelbehälters (11).

9. Verfahren nach einem beliebigen der Ansprüche 1-8, **dadurch gekennzeichnet, dass** das Material auch direkt, von einer Eingabeöffnung (9), die in dem oberen Teil des Behälters angeordnet ist, aus in den Sammelbehälter (11) eingespeist wird.

10. Verfahren nach einem beliebigen der Ansprüche 1-9, **dadurch gekennzeichnet, dass** in dem Verfahren Material in ein Förderrohr (100) von den Eingabestellen (108) für Material aus eingespeist wird, die die Abfalleingabestellen, wie beispielsweise Abfallbehälter oder Abfallschächte, sind.

11. Verfahren nach einem beliebigen der Ansprüche 1-10, **dadurch gekennzeichnet, dass** in dem Verfahren das Materialfördersystem ein Abfallfördersystem ist.

12. Trennvorrichtung für ein pneumatisches Materialfördersystem, das Mittel zur Verbindung eines Materialförderrohrs (100) mit der Eingabeöffnung der Trennvorrichtung und Mittel zur Ableitung der Transportluft aus dem Kammerraum der Trennvorrichtung aufweist,
wobei die Trennvorrichtung eine Tiefensammelbehälter-Trennvorrichtung ist, die Mittel (30) zur Anhebung des Sammelbehälters (11) aufweist, und wobei der Sammelbehälter (11) eine öffenbare Öffnung (6) in dem unteren Teil aufweist, und
**dadurch gekennzeichnet, dass** der Sammelbehälter (11) eingerichtet ist, um als ein Zyklonabscheider zu funktionieren.

13. Trennvorrichtung nach Anspruch 12, **dadurch gekennzeichnet, dass** die Tiefensammelbehälter-Trennvorrichtung einen eigentlichen Sammelbehälter (11) und einen äußeren Behälter (12) aufweist.

14. Trennvorrichtung nach Anspruch 12 oder 13, **dadurch gekennzeichnet, dass** der obere Teil des Sammelbehälters (11) eine Eingabeöffnung (9) aufweist.

15. Trennvorrichtung nach einem beliebigen der Ansprüche 12-14, **dadurch gekennzeichnet, dass** sich der Sammelbehälter (11) wenigstens in dem unteren Teil zu der Ausgabeöffnung (6) hin verengt.

16. Trennvorrichtung nach einem beliebigen der Ansprüche 12-15, **dadurch gekennzeichnet, dass** eine Ausgabeabzweigverbindung (16) in dem Ausgabekanal des Sammelbehälters (11) in einer vorwiegend tangentialen Richtung in Bezug auf die Wand (13) des Ausgabekanals angeordnet ist.

17. Trennvorrichtung nach einem beliebigen der Ansprüche 12-16, **dadurch gekennzeichnet, dass** die Vorrichtung Mittel aufweist, um die Transportluft und das mit dieser ankommende Material (w+a) in dem Sammelbehälter (11) zunächst in eine erste Richtung in Bezug auf die vertikale Achse des Sammelbehälters in Drehbewegung zu bringen und die abgehende Transportluft (a) in eine vorwiegend entgegengesetzte Drehrichtung in Drehbewegung zu bringen.

18. Trennvorrichtung nach einem beliebigen der Ansprüche 12-17, **dadurch gekennzeichnet, dass** der äußere Behälter (12) wenigstens teilweise bis unter die Bodenoberfläche (S) eingelassen ist.

19. Abfallfördersystem, das wenigstens eine Eingabestelle (108) für Abfallmaterial, ein Materialförderrohr (100), das mit wenigstens einer der Eingabestellen (108) verbunden sein kann, und eine Trennvorrichtung oder einen Behälter (11), in der bzw. dem das zu transportierende Material von der Transportluft getrennt wird, und ferner Mittel zur Erreichung einer Druckdifferenz und/oder einer Transportluftströmung in dem Förderrohr (100) wenigstens während des Transports von Material aufweist,
wobei die Trennvorrichtung (10) einem beliebigen der vorhergehenden Ansprüche 12-17 entspricht,
wobei Material eingerichtet ist, um von den Eingabestellen (108) aus über das Förderrohr (100) in die Trennvorrichtung (10) hinein befördert zu werden.

20. Abfallfördersystem nach Anspruch 19, **dadurch gekennzeichnet, dass** die Mittel zur Erreichung einer Druckdifferenz und/oder einer Transportluftströmung in dem Förderrohr wenigstens eine Teilvakuumquelle (21) aufweisen, wobei mit Hilfe der durch diese erreichten Sog- oder Druckdifferenz oder Transportluftströmung Material in dem Förderrohr befördert wird.

21. Abfallfördersystem nach Anspruch 19 oder 20, **dadurch gekennzeichnet, dass** die Mittel zur Erreichung einer Druckdifferenz und/oder einer Transportluftströmung in dem Förderrohr wenigstens eine Druckquelle oder ein Gebläse aufweisen, wobei mit Hilfe der durch diese bzw. dieses erreichten Druckdifferenz oder Transportluftströmung Material in dem Förderrohr befördert wird.

22. Abfallfördersystem nach einem beliebigen der Ansprüche 19-21, **dadurch gekennzeichnet, dass** Mittel zur Erreichung einer Druckdifferenz und/oder einer Transportluftströmung in dem Förderrohr in einer mobilen Einrichtung (20), beispielsweise in einem Fahrzeug oder einem Anhänger, angeordnet sind, wobei die Mittel zur Erreichung einer Druckdifferenz und/oder einer Transportluftströmung mit einem Abfallfördersystem verbunden sind und das Teilvakuum / die Druckdifferenz / die Transportluftströmung, das bzw. die für die Beförderung von Abfallmaterial in dem System benötigt wird, erreicht wird, wobei in diesem Fall Abfallmaterial entlang der Förderrohrleitung (100, 101A, 101B) zu einem Sammelbehälter (11) überführt wird.

23. Abfallfördersystem nach einem beliebigen der Ansprüche 19-22, **dadurch gekennzeichnet, dass** der Sammelbehälter (11) eingerichtet ist, um in den Behälterraum (41) einer Transporteinrichtung (40) hinein entleert zu werden, wobei in dem Behälterraum das Material vorzugsweise komprimiert wird, damit es dichter wird, und wobei die Transporteinrichtung (40) das Material abtransportiert.

24. Abfallfördersystem nach einem beliebigen der Ansprüche 19-23, **dadurch gekennzeichnet, dass** die Mittel zur Erreichung einer Druckdifferenz und/oder einer Transportluftströmung in dem Förderrohr eingerichtet sind, um als die Mittel zur Erreichung einer Druckdifferenz und/oder einer Transportluftströmung in dem Förderrohr einer Anzahl unterschiedlicher Materialfördersysteme in einer derartigen Weise zu funktionieren, dass die Mittel zur Erreichung einer Druckdifferenz und/oder einer Transportluftströmung in dem Förderrohr mit einer mobilen Einrichtung (20) bis zu der Nähe jedes Materialfördersystems überführt werden, um über Verbindungsmittel mit dem Materialfördersystem verbunden zu werden.

25. Abfallfördersystem nach einem beliebigen der Ansprüche 19-24, **dadurch gekennzeichnet, dass** die Eingabestellen (108) für Material die Abfalleingabestellen, wie beispielsweise Abfallbehälter oder Abfallschächte, sind.

26. Abfallfördersystem nach einem beliebigen der Ansprüche 19-25, **dadurch gekennzeichnet, dass** eine Anzahl von Trennvorrichtungen (10a, 10b) vorhanden ist, mit der ein Förderrohr (100) selektiv über eine Ventileinrichtung (120) verbunden werden kann.

## Revendications

1. Procédé pour manipuler un matériau dans un système de transport de matériau pneumatique, lequel système de transport comprend au moins un point d'entrée (108) de matériau, un tuyau de transport de matériau (100) qui peut être raccordé à un point d'entrée (108) et un dispositif de séparation ou un contenant (11) dans lequel le matériau à transporter est séparé de l'air de transport, et également des moyens pour obtenir une différence de pression et/ou un écoulement d'air de transport dans le tuyau de transport (100) au moins pendant le transport du matériau, dans lequel, dans le procédé, le dispositif de séparation est un dispositif de séparation - contenant de collecte profond (10) dans lequel le matériau est transporté à partir des points d'entrée (108) via un tuyau de transport (100), dans lequel dans la phase de vidage, le contenant de collecte (11) est levé avec des moyens de levage et le matériau (w) qui a été collecté dans le contenant de collecte (11) est vidé via une ouverture pouvant s'ouvrir et se fermer (6) agencée dans la partie inférieure du contenant de collecte (11),
**caractérisé en ce que** le contenant de collecte (11) fonctionne comme un séparateur cyclonique.

2. Procédé selon la revendication 1, **caractérisé en ce que** les moyens pour obtenir une différence de pression et/ou un écoulement d'air de transport dans le tuyau de transport comprennent au moins une source de vide partiel (21), à l'aide de l'aspiration ou de la différence de pression ou de l'écoulement d'air de transport obtenu, grâce auquel le matériau est transporté dans le tuyau de transport.

3. Procédé selon la revendication 1 ou 2, **caractérisé en ce que** les moyens pour obtenir une différence de pression et/ou un écoulement d'air de transport dans le tuyau de transport comprennent au moins une source de pression ou ventilateur à l'aide de la différence de pression ou de l'écoulement d'air de transport obtenu grâce auquel le matériau est transporté dans le tuyau de transport.

4. Procédé selon l'une quelconque des revendications 1 à 3, **caractérisé en ce que** dans le procédé, les moyens pour obtenir une différence de pression et/ou un écoulement d'air de transport dans le tuyau de transport sont agencés dans un moyen mobile (20), tel que dans un véhicule ou une remorque, lesquels moyens pour obtenir une différence de pression et/ou un écoulement d'air de transport sont raccordés au système de transport de matériau, et le vide partiel/différence de pression/écoulement d'air de transport nécessaire pour le transport du matériau dans le système est obtenu, auquel cas, le matériau (W) est transféré le long du tuyau de transport (100, 101A, 101B) jusqu'à un contenant de collecte (11).

5. Procédé selon l'une quelconque des revendications 1 à 4, **caractérisé en ce que** dans le procédé, le contenant de collecte (11) est vidé dans l'espace de contenant (41) d'un moyen de transport (40), dans lequel espace de contenant, le matériau est de préférence compressé pour être plus dense, et lequel moyen de transport (40) transporte le matériau.

6. Procédé selon l'une quelconque des revendications 1 à 5, **caractérisé en ce que** le contenant de collecte (11) est levé dans la phase de vidage à partir du contenant externe (12) dans lequel il est au moins partiellement, et après la phase de vidage, le contenant de collecte (11) vidé est abaissé dans le contenant externe (12).

7. Procédé selon l'une quelconque des revendications 1 à 6, **caractérisé en ce que** les moyens pour obtenir une différence de pression et/ou un écoulement d'air de transport dans le tuyau de transport sont utilisés en tant que moyens pour obtenir une différence de pression et/ou un écoulement d'air de transport dans le tuyau de transport d'un certain nombre de systèmes de transport de matériaux différents, auquel cas, les moyens pour obtenir une différence de pression et/ou un écoulement d'air de transport dans le tuyau de transport sont transférés avec un moyen mobile (20) à proximité de chaque système de transport de matériau et raccordés avec des moyens de raccordement au système de transport de matériau.

8. Procédé selon l'une quelconque des revendications 1 à 7, **caractérisé en ce que** l'intervalle opératoire par rapport au système de transport de matériau des moyens pour obtenir une différence de pression et/ou un écoulement d'air de transport dans le tuyau de transport est plus fréquent que l'intervalle de vidage du contenant de collecte (11).

9. Procédé selon l'une quelconque des revendications 1 à 8, **caractérisé en ce que** le matériau est amené dans le contenant de collecte (11) également directement, à partir d'une ouverture d'entrée (9) agencée dans la partie supérieure du contenant.

10. Procédé selon l'une quelconque des revendications 1 à 9, **caractérisé en ce que** dans le procédé, le matériau est amené dans un tuyau de transport (100) à partir des points d'entrée (108) du matériau, qui sont les points d'entrée de déchet, tels que des réceptacles de déchet ou des vide-ordures.

11. Procédé selon l'une quelconque des revendications 1 à 10, **caractérisé en ce que** dans le procédé, le système de transport de matériau est un système de transport de déchets.

12. Dispositif de séparation pour un système de transport de matériau pneumatique qui comprend des moyens pour raccorder un tuyau de transport de matériau (100) à une ouverture d'entrée du dispositif de séparation et des moyens pour éloigner l'air de transport de l'espace de chambre du dispositif de séparation, dans lequel :
le dispositif de séparation est un dispositif de séparation de contenant de collecte profond qui comprend des moyens (30) pour lever le contenant de collecte (11) et lequel contenant de collecte (11) comprend une ouverture pouvant s'ouvrir (6) dans la partie inférieure, et
**caractérisé en ce que** le contenant de collecte (11) est configuré pour fonctionner comme un séparateur cyclonique.

13. Dispositif de séparation selon la revendication 12, **caractérisé en ce que** le dispositif de séparation de contenant de collecte profond comprend un véritable contenant de collecte (11) et un contenant externe (12).

14. Dispositif de séparation selon la revendication 12 ou 13, **caractérisé en ce que** la partie supérieure du contenant de collecte (11) comprend une ouverture d'entrée (9).

15. Dispositif de séparation selon l'une quelconque des revendications 12 à 14, **caractérisé en ce que** le contenant de collecte (11) se rétrécit au moins dans la partie inférieure vers l'ouverture de sortie (6).

16. Dispositif de séparation selon l'une quelconque des revendications 12 à 15, **caractérisé en ce qu'**un couplage de branche de sortie (16) est agencé dans le canal de sortie du contenant de collecte (11) dans une direction principalement tangentielle par rapport à la paroi (13) du canal de sortie.

17. Dispositif de séparation selon l'une quelconque des revendications 12 à 16, **caractérisé en ce que** le dispositif comprend des moyens pour amener l'air de transport et le matériau venant avec ce dernier (w+a) initialement dans un mouvement de rotation dans le contenant de collecte (11) dans une première direction par rapport à l'axe vertical du contenant de collecte, et pour amener l'air de transport sortant (a) dans un mouvement de rotation dans une direction de rotation principalement opposée.

18. Dispositif de séparation selon l'une quelconque des revendications 12 à 17, **caractérisé en ce que** le contenant externe (12) est encastré au-dessous du niveau du sol (S) au moins partiellement.

19. Système de transport de déchets qui comprend au moins un point d'entrée (108) de matériau de déchet, un tuyau de transport de matériau (100) qui peut être raccordé à au moins l'un desdits points d'entrée (108) et un dispositif de séparation ou contenant (11) dans lequel le matériau à transporter est séparé de l'air de transport et également des moyens pour obtenir une différence de pression et/ou un écoulement d'air de transport dans le tuyau de transport (100) au moins pendant le transport du matériau, dans lequel :
le dispositif de séparation (10) est selon l'une quelconque des revendications 12 à 17,
dans lequel le matériau est configuré pour être transporté à partir des points d'entrée (108) dans ledit dispositif de séparation (10) via ledit tuyau de transport (100).

20. Système de transport de déchets selon la revendication 19, **caractérisé en ce que** les moyens pour obtenir une différence de pression et/ou un écoulement d'air de transport dans le tuyau de transport comprennent au moins une source de vide partiel (21), à l'aide de l'aspiration ou de la différence de pression ou de l'écoulement d'air de transport obtenu, grâce auquel le matériau est transporté dans le tuyau de transport.

21. Système de transport de déchets selon la revendication 19 ou 20, **caractérisé en ce que** les moyens pour obtenir une différence de pression et/ou un écoulement d'air de transport dans le tuyau de transport comprennent au moins une source de pression ou ventilateur, à l'aide de la différence de pression ou d'écoulement d'air de transport obtenu, grâce auquel le matériau est transporté dans le tuyau de transport.

22. Système de transport de déchets selon l'une quelconque des revendications 19 à 21, **caractérisé en ce que** les moyens pour obtenir une différence de pression et/ou un écoulement d'air de transport dans le tuyau de transport sont agencés dans un moyen mobile (20) tel qu'un véhicule ou une remorque, lesquels moyens pour obtenir une différence de pression et/ou un écoulement d'air de transport sont raccordés à un système de transport de déchets, et le vide partiel/la différence de pression/l'écoulement d'air de transport nécessaires pour le transport du matériau de déchet dans le système est obtenu, auquel cas, le matériau de déchet est transporté le long du tuyau de transport (100, 101A, 101B) jusqu'à un contenant de collecte (11).

23. Système de transport de déchets selon l'une quelconque des revendications 19 à 22, **caractérisé en ce que** le contenant de collecte (11) est configuré pour être vidé dans l'espace de contenant (41) d'un moyen de transport (40), dans lequel espace de contenant, le matériau est de préférence comprimé pour être plus dense et lequel moyen de transport (40) transporte le matériau.

24. Système de transport de déchets selon l'une quelconque des revendications 19 à 23, **caractérisé en ce que** les moyens pour obtenir une différence de pression et/ou un écoulement d'air de transport dans le tuyau de transport sont configurés pour fonctionner comme les moyens pour obtenir une différence de pression et/ou un écoulement d'air de transport dans le tuyau de transport d'un certain nombre de systèmes de transport de matériau différents, de sorte que les moyens pour obtenir une différence de pression et/ou un écoulement d'air de transport dans le tuyau de transport sont transférés avec un moyen mobile (20) à proximité de chaque système de transport de matériau pour se raccorder avec des moyens de raccordement au système de transport de matériau.

25. Système de transport de déchets selon l'une quelconque des revendications 19 à 24, **caractérisé en ce que** les points d'entrée (108) de matériau sont les points d'entrée de déchets, tel que des réceptacles de déchets ou des vide-ordures.

26. Système de transport de déchets selon l'une quelconque des revendications 19 à 25, **caractérisé en ce qu'**il y a un certain nombre de dispositifs de séparation (10A, 10B) auxquels un tuyau de transport (100) peut être raccordé d'une manière sélective avec un moyen de valve (120).
